# FASCICULE DE BREVET EUROPEEN

(11) **EP 2 922 731 B1**
(45) Date de publication et mention de la délivrance du brevet: **04.01.2017**
(21) Numéro de dépôt: 13792026.0
(22) Date de dépôt: 18.11.2013
(51) Int. Cl.: B60R 19/52

(54) **BOUCLIER AVANT D'UN VEHICULE AUTOMOBILE RECEVANT UNE BAGUETTE DE FINITION**
VORDERER STOSSFÄNGER FÜR EIN KRAFTFAHRZEUG MIT FORMUNGSBEARBEITUNG
MOTOR VEHICLE FRONT BUMPER RECEIVING A FINISHING MOLDING

(30) Priorité: 21.11.2012 FR 1261062
(43) Date de publication de la demande: 30.09.2015
(73) Titulaire: Renault S.A.S., 92100 Boulogne-Billancourt (FR)
(72) Inventeur: LINGET, Jarno, F-78690 Les Essarts Le Roi (FR)
(86) Numéro de dépôt international: PCT/EP2013/074098
(87) Numéro de publication internationale: WO 2014/079816

(56) Documents cités:
- EP-A1- 1 457 390
- FR-A1- 2 922 171
- JP-A- 2003 182 484
- JP-A- 2009 248 700
- JP-U- S6 171 546

## Description

### Domaine de l'invention :

La présente invention concerne un bouclier avant de véhicule automobile. L'invention se rapporte plus particulièrement à un bouclier avant de véhicule comprenant une grille d'entrée d'air pour l'alimentation en air d'un ensemble de refroidissement du groupe motopropulseur du véhicule, sur laquelle est montée une baguette de finition, typiquement une baguette chromée.

### Etat de la technique :

On connaît des véhicules pourvus d'un bouclier avant comprenant une grille d'entrée d'air sur laquelle est montée une baguette de finition. Une telle grille est classiquement constituée d'un réseau de barreaux verticaux et horizontaux entrecroisés. Sur certains véhicules, on prévoit une baguette de finition autrement appelé «jonc», par exemple d'aspect chromé, monté sur un barreau horizontal sensiblement à mi-hauteur de la grille. Une telle baguette est clippée sur le barreau formant support en de multiples points de fixation répartis sur la longueur de la baguette. De nos jours il est courant au sein d'une gamme de véhicules donnée, de moduler le niveau d'équipements et de finition selon les types de véhicule dans cette gamme, ceci aux fins de différencier les véhicules. Sur certains véhicules fortement équipés, on choisit de monter une telle baguette de finition sur la grille. Sur d'autres véhicules moins équipés, on préfère ne pas prévoir de baguette de finition. Or les moyens de clippage utilisés entre la baguette et la grille sont apparents et inesthétiques lorsqu'aucune baguette n'est montée sur la grille. L'aspect extérieur du bouclier avant est fortement dégradé dans ce cas. Une parade consiste à prévoir un type de grille spécifique à chaque niveau d'équipements, mais cette solution ne favorisent pas la standardisation et génère des surcoûts importants. En outre la baguette et la grille sont sujets à des déformations dues à la dilatation, l'usure, les chocs etc. La baguette est donc susceptible de se désolidariser de la grille, notamment à ces extrémités. Le document JP 2003 182 484 A décrit un bouclier avant de véhicule automobile correspondant au préambule de la revendication 1.

### But de l'invention :

L'invention a pour but de pallier tout ou partie des inconvénients précédents en proposant un bouclier avant de véhicule automobile qui n'impose pas de prévoir différents types de grilles en fonction du niveau d'équipements et de finition des véhicule au sein d'une même gamme, tout en évitant des formes fonctionnelles inesthétiques sur la grille lorsqu'aucune baguette de finition n'est montée sur celle-ci.

### Objet de l'invention :

A cet effet, l'invention a pour objet un bouclier avant d'un véhicule automobile, comprenant une grille d'entrée d'air pour l'alimentation en air d'un ensemble de refroidissement du groupe motopropulseur du véhicule, sur laquelle est montée une baguette de finition, la grille étant constituée d'un réseau de barreaux verticaux et horizontaux entrecroisés, l'un au moins des barreaux horizontaux formant un support pour la baguette de finition horizontale accolée de tout son long au support, le support ayant une section transversale ayant la forme générale d'un S définissant dans sa partie supérieure une rainure tournée vers l'avant du véhicule, et dans sa partie inférieure une zone bombée proéminente vers l'avant du véhicule, tandis que la baguette ayant en section transversale la forme générale d'un C est enfourchée sur la zone bombée, la baguette étant maintenue sur le support d'une part par un bord supérieur coincé dans la rainure et d'autre part par des moyens de clippage conformés pour assurer un ancrage d'un bord inférieur de la baguette avec la base de la zone bombée, la baguette comportant des parties d'extrémité formant des décrochements vers l'arrière, ces parties d'extrémité étant recouvertes par l'avant par des pièces de finition adjacentes, en particulier par des enjoliveurs de projecteurs anti-brouillard.

La baguette est donc parfaitement maintenue en place sur la grille. Les extrémités de la baguette susceptibles de se décoller au cours du temps sont retenues de façon fiable et très discrète. Lorsqu'aucune baguette n'est montée sur la grille, aucun élément de fixation n'est apparent depuis l'extérieur du véhicule.

Selon d'autres caractéristiques avantageuses de l'invention :
- les moyens de clippage comprennent une pluralité de protubérances réparties le long du support et conformées à la base de la zone bombée en s'étendant vers le bas, ces protubérances pénétrant dans des ouvertures correspondantes ménagées sur le bord inférieur de la baguette,
- le bord supérieur de la baguette et la rainure du support ont des formes en coin assurant un coincement sans jeu entre ces deux éléments,
- la baguette est élastiquement arque-boutée entre son bord supérieur et son bord inférieur maintenus sur le support, de façon à supprimer tout jeu ou débattement relatif entre la baguette et le support,
- le bord supérieur de la baguette comporte un épaulement recouvrant au moins en partie une face avant verticale du support,
- les protubérances ont une zone frontale ayant la forme générale d'une rampe, de façon à faciliter le glissement du bord inférieur de la baguette jusqu'à l'emboitement des protubérances et des ouvertures lors du montage de la baguette sur le support,

L'invention a également pour objet un véhicule automobile comprenant un bouclier avant ayant tout ou partie des caractéristiques précédentes,

### Exposé de l'invention :

L'invention sera mieux comprise à la lecture de la description suivante d'un exemple non limitatif de l'invention, et à la lumière des dessins annexés sur lesquels :
- les figures 1 et 2 représentent des vues de la face avant d'un bouclier avant de véhicule automobile suivant l'invention, respectivement sans et avec une baguette de finition montée sur la grille,
- la figure 3 est une section partielle du bouclier avant de la figure 2 suivant la ligne de coupe verticale A-A et
- la figure 4 est une section partielle du bouclier avant de la figure 2 suivant la ligne de coupe horizontale B-B.

Dans le présent texte, les directions et orientations sont indiquées en référence au repère XYZ classiquement utilisé dans la conception des véhicules, dans lequel X désigne la direction longitudinale avant-arrière du véhicule, orienté vers l'arrière, Y la direction transversale au véhicule, orienté vers la droite, et Z la direction verticale, orienté vers le haut. Les notions avant-arrière sont données en référence à l'orientation avant-arrière du véhicule.

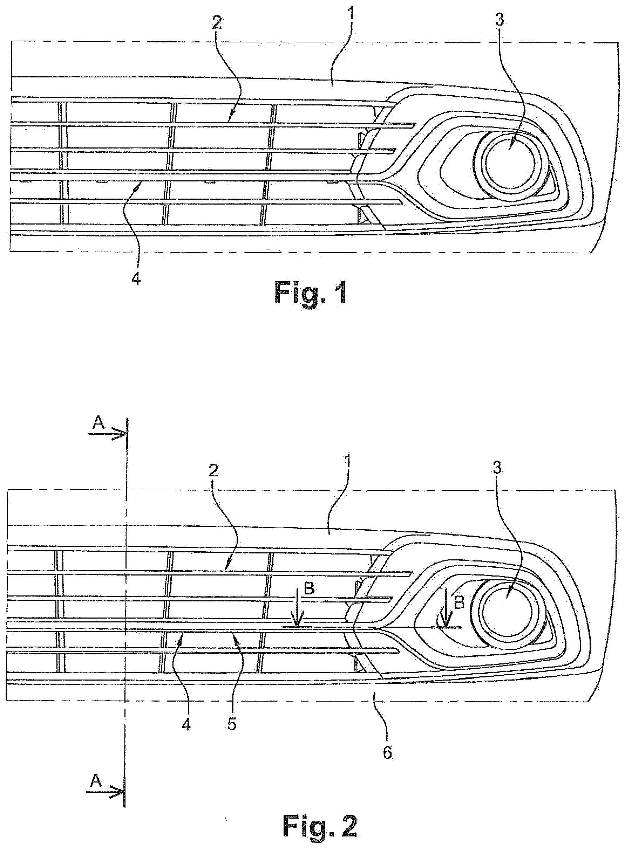

On a représenté aux figures 1 et 2 une vue partielle d'un bouclier avant 1 d'un véhicule automobile. Le bouclier 1 s'étend sur toute la largeur du véhicule. Il comporte dans sa partie centrale une grille 2 d'entrée d'air pour le passage d'air frais à destination de l'ensemble de refroidissement (non représenté) du groupe motopropulseur du véhicule. Dans l'exemple représenté, le bouclier 1 comporte dans ses parties latérales des ouvertures 3 destinées à être alignées avec des projecteurs anti-brouillard (non représentés) du véhicule.
La grille 2 est constituée d'un réseau ou quadrillage de barreaux verticaux et horizontaux entrecroisés. L'un au moins des barreaux horizontaux forme un support 4 pour une baguette de finition 5 horizontale accolée de tout son long au barreau. Une telle baguette de finition 5 est typiquement un jonc chromé. Ce support 4 est par exemple situé à mi-hauteur de la grille ou légèrement en dessous comme illustré à la figure 2.
Dans l'exemple illustré, la baguette de finition 5 a une longueur sensiblement égale à la partie ajourée de la grille 2, c'est-à-dire aux barreaux horizontaux. Comme on le voit à la figure 2, la baguette de finition 5 est ajustée à chacune de ses extrémités avec des pièces de finitions 6 adjacentes prévues sur le bouclier 1, typiquement des enjoliveurs de projecteur anti-brouillard. Ces enjoliveurs 6 ont ici une forme entourant les ouvertures 3 et sont pourvues d'une extension affinée du côté intérieur, tourné vers la baguette 5, assurant une jonction propre et homogène avec les extrémités de la baguette 5.

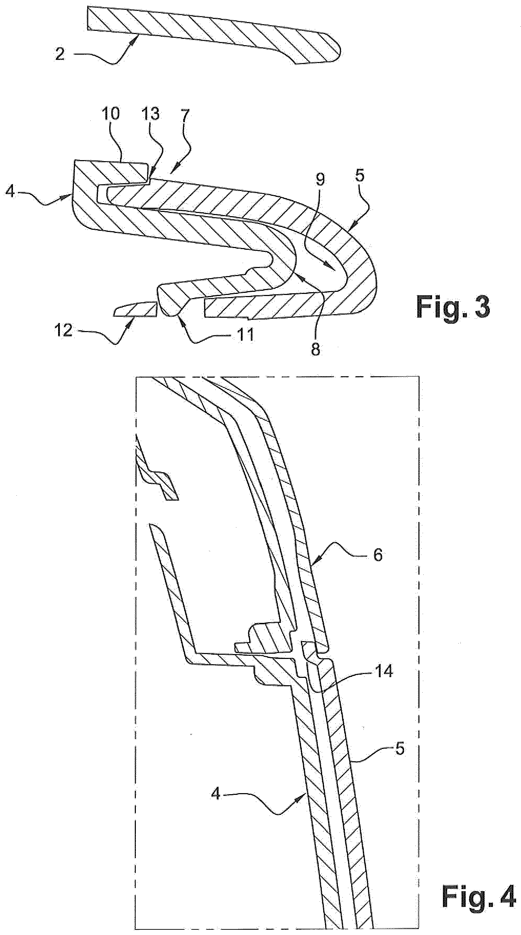

En référence à la figure 3 qui illustre une section suivant la ligne de coupe A-A, de la grille 2 et de la baguette 5, le barreau formant support 4 a une section transversale ayant la forme générale d'un S. Le terme « transversale » est compris ici dans le plan XZ (transversal à la direction longitudinale de la baguette). La forme en S définit dans sa partie supérieure une rainure 7 tournée vers l'avant du véhicule, et dans sa partie inférieure une zone bombée 8 proéminente vers l'avant du véhicule.
La baguette 5 a en section transversale la forme générale d'un C enfourchée sur la zone bombée 8. Cette dernière pénètre dans la partie creuse 9 du C (figure 3). La baguette 5 est maintenue sur le support 4 d'une part par un bord supérieur 10 introduit et coincé dans la rainure 7. La baguette 5 est d'autre part maintenue par des moyens de clippage 11 conformés pour assurer un ancrage d'un bord inférieur 12 de la baguette 5 avec la base de la zone bombée 8.
Les moyens de clippage 11 comprennent une pluralité de protubérances (ou bossages ou reliefs) réparties le long du support 4 et conformées à la base de la zone bombée 8. Ces protubérances s'étendent vers le bas. Elles pénètrent dans des ouvertures correspondantes ménagées sur le bord inférieur 12 de la baguette 5. Les protubérances ont une zone frontale, tournée vers l'avant du véhicule, ayant la forme générale d'une rampe, ce qui facilite le glissement du bord inférieur 12 de la baguette 5 lors de sa mise en place sur le support 4, jusqu'à l'emboitement des protubérances dans les ouvertures.
On note que le bord supérieur 10 de la baguette 5 et la rainure 7 du support 4 ont des formes en coin assurant un coincement sans jeu entre ces deux éléments.
La baguette 5 peut être élastiquement arque-boutée entre son bord supérieur 10 et son bord inférieur 12, de façon que le support 4 tende à écarter légèrement la partie creuse en U de la baguette 5. Ceci a pour effet de supprimer tout jeu ou débattement relatif entre la baguette 5 et le support 4.

Le bord supérieur 10 de la baguette 5 comporte un épaulement 13 recouvrant au moins en partie une face avant verticale du barreau 4 (face tournée vers l'avant du véhicule). Cette face avant correspond typiquement à l'épaisseur locale du barreau 4 dans la partie supérieure de celui-ci qui délimite par le haut la rainure 7.

Par ailleurs en référence à la figure 4 qui illustre une section suivant la ligne de coupe horizontale B-B de la figure 2 à l'extrémité du support 4 et de la baguette 5, la baguette 5 comporte des parties d'extrémité 14 formant des décrochements vers l'arrière ou soyages. Ces parties d'extrémité 14 sont recouvertes par l'avant par des pièces de finition adjacentes 6, typiquement par les parties intérieures des enjoliveurs de projecteurs anti-brouillard, qui forment des extensions affinées en continuité avec les extrémités 14 de la baguette 5. Le recouvrement des extrémités 14 par les pièces de finition 6 est réalisé sur quelques millimètres suivant la direction transversale Y, typiquement sur 2 à 5 mm. Ces pièces de finition 6 contribuent au maintien de la baguette 5 à chacune de ces extrémités. Lors du montage de la baguette 5, les pièces de finition 6 (ou enjoliveurs) sont donc montées après la baguette. Lors du démontage de la baguette 5, ces pièces de finition doivent être démontées préalablement à la baguette 5. En outre les surfaces avant de la baguette 5 et des pièces de finition 6 sont affleurantes pour un meilleur rendu esthétique. A cet effet, les décrochements vers l'arrière ou soyages aux extrémités 14 de la baguette 5 forment des renfoncements dont la dimension suivant la direction X correspond sensiblement à l'épaisseur des pièces de finitions 6 suivant cette direction X, cette épaisseur étant mesurée localement sur les extensions qui assurent le recouvrement des extrémités de la baguette 5.

Bien entendu, l'invention n'est pas limitée aux modes ou variantes de réalisation décrits précédemment et comprends tous les équivalents techniques de ces moyens.

## Revendications

1. Bouclier avant d'un véhicule automobile, comprenant une grille (2) d'entrée d'air pour l'alimentation en air d'un ensemble de refroidissement du groupe motopropulseur du véhicule, sur laquelle est montée une baguette de finition (5), la grille (2) étant constituée d'un réseau de barreaux verticaux et horizontaux entrecroisés, l'un au moins des barreaux horizontaux formant un support (4) pour la baguette de finition (5) horizontale accolée de tout son long au support (4), le support (4) ayant une section transversale ayant la forme générale d'un S définissant dans sa partie supérieure une rainure (7) tournée vers l'avant du véhicule, et dans sa partie inférieure une zone bombée (8) proéminente vers l'avant du véhicule, tandis que la baguette (5) ayant en section transversale la forme générale d'un C est enfourchée sur la zone bombée (8), la baguette (5) étant maintenue sur le support (4) d'une part par un bord supérieur (10) coincé dans la rainure (7) et d'autre part par des moyens de clippage (11) conformés pour assurer un ancrage d'un bord inférieur (12) de la baguette (5) avec la base de la zone bombée (8), **caractérisé en ce que** la baguette (5) comporte des parties d'extrémité (14) formant des décrochements vers l'arrière, ces parties d'extrémité (14) étant recouvertes par l'avant par des pièces de finition (6) adjacentes, en particulier par des enjoliveurs de projecteurs anti-brouillard.

2. Bouclier avant selon la revendication 1, **caractérisé en ce que** les moyens de clippage (11) comprennent une pluralité de protubérances réparties le long du support (4) et conformées à la base de la zone bombée (8) en s'étendant vers le bas, ces protubérances pénétrant dans des ouvertures correspondantes ménagées sur le bord inférieur (12) de la baguette (5).

3. Bouclier avant selon la revendication 1 ou 2, **caractérisé en ce que** le bord supérieur (10) de la baguette (5) et la rainure (7) du support (4) ont des formes en coin assurant un coincement sans jeu entre ces deux éléments (4, 5).

4. Bouclier avant selon l'une quelconque des revendications 1 à 3, **caractérisé en ce que** la baguette (5) est élastiquement arque-boutée entre son bord supérieur (10) et son bord inférieur (12) maintenus sur le support (4), de façon à supprimer tout jeu ou débattement relatif entre la baguette (5) et le support (4).

5. Bouclier avant selon l'une quelconque des revendications précédentes, **caractérisé en ce que** le bord supérieur (10) de la baguette (5) comporte un épaulement (13) recouvrant au moins en partie une face avant verticale du support (4).

6. Bouclier avant selon l'une quelconque des revendications 2 à 5, **caractérisé en ce que** les protubérances ont une zone frontale ayant la forme générale d'une rampe, de façon à faciliter le glissement du bord inférieur (12) de la baguette (5) jusqu'à l'emboitement des protubérances et des ouvertures lors du montage de la baguette (5) sur le support (4).

7. Véhicule automobile, **caractérisé en ce qu'**il comprend un bouclier avant selon l'une quelconque des revendications précédentes.

## Patentansprüche

1. Vorderer Stoßfänger eines Kraftfahrzeugs, der ein Lufteinlassgitter (2) zur Luftversorgung einer Kühleinheit der Antriebseinheit des Fahrzeugs enthält, auf das eine Abschlussleiste (5) montiert ist, wobei das Gitter (2) aus einem Netz von sich kreuzenden senkrechten und waagrechten Stäben besteht, wobei mindestens einer der waagrechten Stäbe einen Träger (4) für die waagrechte Abschlussleiste (5) bildet, die in ihrer ganzen Länge an den Träger (4) angefügt ist, wobei der Träger (4) einen Querschnitt hat, der die allgemeine Form eines S hat, das in seinem oberen Teil eine zur Vorderseite des Fahrzeugs gerichtete Rille (7) definiert und in seinem unteren Teil eine gewölbte Zone (8) hat, die zur Vorderseite des Fahrzeugs vorspringt, während die Leiste (5) im Querschnitt die allgemeine Form eines C hat, das auf die gewölbte Zone (8) aufgeschoben ist, wobei die Leiste (5) auf dem Träger (4) einerseits durch einen oberen Rand (10), der in die Rille (7) eingeklemmt ist, und andererseits durch Einklinkeinrichtungen (11) gehalten wird, die so gestaltet sind, dass sie eine Verankerung eines unteren Rands (12) der Leiste (5) mit der Basis der gewölbten Zone (8) gewährleisten, **dadurch gekennzeichnet, dass** die Leiste (5) Endteile (14) aufweist, die Rücksprünge nach hinten bilden, wobei diese Endteile (14) nach vorne von benachbarten Abschlussbauteilen (6) bedeckt sind, insbesondere von Zierkappen von Nebelscheinwerfern.

2. Vorderer Stoßfänger nach Anspruch 1, **dadurch gekennzeichnet, dass** die Einklinkeinrichtungen (11) eine Vielzahl von Vorwölbungen enthalten, die entlang des Trägers (4) verteilt und an der Basis der gewölbten Zone (8) gestaltet sind, indem sie sich nach unten erstrecken, wobei diese Vorwölbungen in entsprechende Öffnungen eindringen, die am unteren Rand (12) der Leiste (5) ausgespart sind.

3. Vorderer Stoßfänger nach Anspruch 1 oder 2, **dadurch gekennzeichnet, dass** der obere Rand (10) der Leiste (5) und die Rille (7) des Trägers (4) Keilformen haben, die ein Verkeilen ohne Spiel zwischen diesen zwei Elementen (4, 5) gewährleisten.

4. Vorderer Stoßfänger nach einem der Ansprüche 1 bis 3, **dadurch gekennzeichnet, dass** die Leiste (5) zwischen ihrem oberen Rand (10) und ihrem unteren Rand (12), die auf dem Träger (4) gehalten werden, elastisch abgestützt wird, um jedes relative Spiel oder Ausschlag zwischen der Leiste (5) und dem Träger (4) zu verhindern.

5. Vorderer Stoßfänger nach einem der vorhergehenden Ansprüche, **dadurch gekennzeichnet, dass** der obere Rand (10) der Leiste (5) eine Schulter (13) aufweist, die eine senkrechte Vorderseite des Trägers (4) zumindest zum Teil bedeckt.

6. Vorderer Stoßfänger nach einem der Ansprüche 2 bis 5, **dadurch gekennzeichnet, dass** die Vorwölbungen eine stirnseitige Zone in der allgemeinen Form einer Rampe haben, um das Gleiten des unteren Rands (12) der Leiste (5) bis zum Ineinanderfügen der Vorwölbungen und der Öffnungen bei der Montage der Leiste (5) auf den Träger (4) zu erleichtern.

7. Kraftfahrzeug, **dadurch gekennzeichnet, dass** es einen vorderen Stoßfänger nach einem der vorhergehenden Ansprüche enthält.

## Claims

1. Front bumper of a motor vehicle comprising an air intake grill (2) for supplying air to a cooling unit for the power train of the vehicle, onto which a finishing molding (5) is mounted, the grill (2) being constituted by a grid of intersecting vertical and horizontal bars, at least one of the horizontal bars forming a holder (4) for the horizontal finishing molding (5), said molding being attached for its entire length to the holder (4), the holder (4) having a generally S-shaped cross section defining, in the upper portion thereof, a groove (7) which faces towards the front of the vehicle and, in the lower portion thereof, a convex area (8) which projects towards the front of the vehicle, while the molding (5) having a generally C-shaped cross section is mounted astride the convex area (8), the molding (5) being maintained on the holder (4) on the one hand by an upper edge (10) that is wedged in the groove (7) and, on the other hand, by clipping means (11) configured in such a way as to ensure that a lower edge (12) of the molding (5) is anchored to the base of the convex area (8), **characterized in that** the molding (5) includes end portions (14) forming recesses towards the rear, said end portions (14) being covered at the front by adjacent finishing parts (6), in particular by embellishers for fog lamps.

2. Front bumper according to Claim 1, **characterized in that** the clipping means (11) comprise a plurality of protuberances distributed along the holder (4) and configured at the base of the convex area (8) by extending towards the bottom, said protuberances penetrating into corresponding openings arranged on the lower edge (12) of the molding (5).

3. Front bumper according to Claim 1 or 2, **characterized in that** the upper edge (10) of the molding (5) and the groove (7) in the holder (4) exhibit corner forms ensuring wedging in the absence of free play between these two elements (4, 5).

4. Front bumper according to any one of Claims 1 to 3, **characterized in that** the molding (5) is elastically braced between its upper edge (10) and its lower edge (12) that are maintained on the holder (4), in such a way as to exclude all free play or relative displacement between the molding (5) and the holder (4).

5. Front bumper according to any one of the preceding claims, **characterized in that** the upper edge (10) of the molding (5) includes a shoulder (13) covering at least in part a vertical front face of the holder (4).

6. Front bumper according to any one of Claims 2 to 5, **characterized in that** the protuberances exhibit a frontal zone having the general shape of a ramp, such as to facilitate the sliding of the lower edge (12) of the molding (5) as far as the insertion of the protuberances and the openings during mounting of the molding (5) on the holder (4).

7. Motor vehicle, **characterized in that** it comprises a front bumper according to any one of the preceding claims.
